(19) Europäisches Patentamt

European Patent Office

Office européen des brevets

(11) **EP 0 603 674 B1**

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int Cl.6: **C08L 33/06**, C08L 25/12, C08L 35/06, C08L 51/00 // (C08L25/12, 33:06, 51:00, 51:00)

(21) Anmeldenummer: **93119951.7**

(22) Anmeldetag: **10.12.1993**

(54) **Thermoplastische Formmassen mit erhöhter Kerbschlagzähigkeit**

Thermoplastic moulding compositions with enhanced notch-impact strength

Masses à mouler thermoplastiques avec résistance améliorée aux chocs

(84) Benannte Vertragsstaaten:
**AT BE CH DE ES FR GB IT LI NL**

(30) Priorität: **18.12.1992 DE 4242974**

(43) Veröffentlichungstag der Anmeldung:
**29.06.1994 Patentblatt 1994/26**

(73) Patentinhaber: **BASF Aktiengesellschaft**
**67063 Ludwigshafen (DE)**

(72) Erfinder:
- **Niessner, Norbert, Dr.**
  **D-67159 Friedelsheim (DE)**
- **Ruppmich, Karl**
  **D-67067 Ludwigshafen (DE)**
- **Mosbach, Norbert**
  **D-67133 Maxdorf (DE)**

(56) Entgegenhaltungen:
**EP-A- 0 450 485**

**Beschreibung**

Die vorliegende Erfindung betrifft thermoplastische Formmassen, enthaltend im wesentlichen

A) 10 bis 80 Gew.%      eines Polymerisates, erhältlich durch Polymerisation eines $C_1$-$C_{20}$-Alkylesters der Methacryl- oder Acrylsäure oder Mischungen solcher Ester,

B) 10 bis 50 Gew.-%     eines Copolymerisates, erhältlich durch Polymerisation eines Monomerengemisches aus

            $b_1$) 73 bis 90 Gew.-% eines vinylaromatischen Monomeren und
            $b_2$) 27 bis 10 Gew.-% eines Comonomeren, ausgewählt aus der Gruppe bestehend aus Acrylnitril, Methacrylnitril, $C_1$-$C_8$-Alkylester der Methacryl- und/oder Acrylsäure, Maleinsäureanhydrid und Maleinsäureimide, die am Imidstickstoff mit einer $C_1$-$C_6$-Alkylgruppe, einer $C_6$-$C_{10}$-Aryl- oder einer $C_6$-$C_{10}$-Aryl-$C_1$-$C_4$-alkylgruppe, wobei die Arylreste bis zu dreifach mit $C_1$-$C_4$-Alkyl substituiert sein können, substituiert sind,

C) 5 bis 50 Gew.-%      eines Pfropfmischpolymerisats, erhältlich durch Polymerisation von

            $c_1$) 20 bis 45 Gew.-% einer Monomerenmischung aus einem vinylaromatischen Monomeren und einem polaren, copolymerisierbaren, ethylenisch ungesättigten Monomeren in Gegenwart von
            $c_2$) 55 bis 80 Gew.-% einer Pfropfgrundlage, erhältlich durch Polymerisation mindestens eines vernetzten, elastomeren $C_1$-$C_{20}$-Alkylester der Acrylsäure mit einem mittleren Teilchendurchmesser (Gewichtsmittel) von 50 bis 150 nm,

und

D) 5 bis 50 Gew.-%      eines weiteren Pfropfmischpolymerisates, erhältlich durch Polymerisation von

            $d_1$) 20 bis 60 Gew.-% eines Monomerengemisches aus einem vinylaromatischen Monomeren und einem polaren, copolymerisierbaren, ethylenisch ungesättigten Monomeren in Gegenwart von
            $d_2$) 40 bis 80 Gew.-% eines vernetzten, elastomeren $C_1$-$C_{20}$-Alkylesters der Acrylsäure als Pfropfgrundlage mit einem mittleren Teilchendurchmesser (Gewichtsmittel) von 200 bis 700 nm.

Außerdem betrifft die Erfindung ein Verfahren zur Herstellung dieser thermoplastischen Formmassen, ihre Verwendung zur Herstellung von Formkörpern sowie Formkörper, enthaltend diese thermoplastischen Formmassen.

Transluzente, d.h. durchscheinende, und transparente Mischungen aus Polymethylmethacrylat (PMMA), Styrol-Acrylnitril-Copolymer (SAN) und einem Pfropfkautschuk sind beispielsweise aus der EP-A 62 223 bekannt. Verbesserungen der Schlagzähigkeit durch Pfropf-Kautschuke können bei diesen Formmassen nur auf Kosten der Transluzenz, der Transparenz und der Einfärbbarkeit erreicht werden.

In der DE-A 28 26 925 werden thermoplastische schlagzähe Formmassen, bestehend im wesentlichen aus einem Styrol-Acrylnitril-(SAN)-Copolymer, einem ersten Pfropfmischpolymerisat aus einem vernetzten Alkylester der Acrylsäure mit einem mittleren Teilchendurchmesser von 50 bis 150 nm und einem zweiten Pfropfmischpolymerisat eines vernetzten Alkylesters der Acrylsäure mit einem mittleren Teilchendurchmesser von 200 bis 500 nm beschrieben. Der Nachteil dieser Formmassen liegt in ihrer unbefriedigenden Einfärbbarkeit.

Aufgabe der vorliegenden Verbindung war es daher, thermoplastische Formmassen mit einer verbesserten Kerbschlagzähigkeit und einer guten Einfärbbarkeit bei gleichzeitig hoher Transluzenz zur Verfügung zu stellen.

Demgemäß wurden die eingangs definierten thermoplastischen Formmassen gefunden.

Ferner wurde ein Verfahren zur Herstellung dieser thermoplastischen Formmassen, deren Verwendung zur Herstellung von Formkörpern sowie Formkörper, enthaltend diese thermoplastischen Formmassen, gefunden.

Die als Komponente A) enthaltenen Polymerisate sind erfindungsgemäß erhältlich durch Polymerisation eines $C_1$-$C_{20}$-Alkylesters der Methacryl- oder Acrylsäure oder Mischungen solcher Ester, vorzugsweise durch Polymerisation eines Monomerengemisches, bestehend aus

$a_1$) 80 bis 100 Gew.-%,     bevorzugt 85 bis 98 Gew-%, eines $C_1$-$C_{20}$-Alkylesters der Methacrylsäure, und
$a_2$) 0 bis 20 Gew.-%,       bevorzugt 2 bis 15 Gew.-%, eines $C_1$-$C_{20}$-Alkylesters der Acrylsäure.

Als $C_1$-$C_{20}$-Alkylester der Methacrylsäure kommen bevorzugt die $C_1$-$C_4$-Alkylester wie Methylmethacrylat ("MMA"), Ethylmethacrylat, n-, i-Propylmethacrylat, n-Butylmethacrylat, Isobutylmethacrylat, sek.- und tert.-Butylmethacrylat in Betracht, wobei Methylmethacrylat besonders bevorzugt ist, sowie Mischungen dieser Monomere.

Als $C_1$-$C_{20}$-Alkylester der Acrylsäure verwendet man bevorzugt die $C_1$-$C_8$-Alkylester wie Methylacrylat ("MA"), Ethylacrylat, Propylacrylat, n-Butylacrylat, Isobutylacrylat, sek.-, tert.-Butylacrylat, Pentylacrylat, Hexylacrylat, Heptylacrylat, Octylacrylat und 2-Ethylhexylacrylat, wobei Methylacrylat besonders bevorzugt ist, sowie Mischungen dieser Monomeren.

Der Zusatz von $C_1$-$C_{20}$-Alkylestern der Acrylsäure bewirkt in der Regel eine Erhöhung der Fließfähigkeit sowohl der Komponente A) als auch der erfindungsgemäßen Formmasse. Vorzugsweise wählt man die Fließfähigkeit der Komponente A) so, daß der Volumenfließindex (gemessen bei 200°C und 21,6 kg nach DIN 53735) der Komponente A) mindestens 8 cm$^3$/10 min beträgt.

Als besonders vorteilhaft haben sich nach den bisherigen Beobachtungen Polymerisate aus 88 bis 99 Gew.-% Methylmethacrylat und 1 bis 12 Gew.-% Methylacrylat mit einem Volumenfließindex MVI im Bereich von 8 bis 55 cm$^3$/10 min erwiesen.

Möglich sind aber auch Copolymerisate aus Methylmethacrylat mit bis zu 20 Gew.-% an Comonomeren wie vinylaromatischen Monomere, insbesondere Styrol und substituiertes Styrol, Acryl- und Methacrylnitril, am Imidstickstoffatom substituierten Maleinimiden, Acryl- und Methacrylsäure sowie Maleinsäureanhydrid.

Die Herstellung der Komponente A) führt man im allgemeinen nach bekannten Polymerisationsverfahren wie Masse-, Lösungs-, Emulsions- oder Perlpolymerisation durch. Solche Verfahren sind beispielsweise im Kunststoffhandbuch, Bd. 9, Vieweg und Esser; Polymethylmethacrylat, Carl-Hanser-Verlag, München, 1975, s. 36 ff beschrieben.

Die Menge der Komponente A), bezogen auf das Gesamtgewicht der transparenten, schlagzähen Formmassen, beträgt erfindungsgemäß 10 bis 80, bevorzugt 15 bis 60 Gew.-%.

Die als Komponente B) enthaltenen Copolymerisate sind erfindungsgemäß erhältlich durch Polymerisation eines Monomerengemisches aus

| 73 bis 90 Gew.-% | vorzugsweise 75 bis 88 Gew.-% eines vinylaromatischen Monomeren, und |
|---|---|
| 10 bis 27 Gew-% | vorzugsweise 12 bis 25 Gew.-%, eines Comonomeren, ausgewählt aus der Gruppe bestehend aus Acrylnitril, Methacrylnitril, $C_1$-$C_8$-Alkylester der Methacryl- und/oder Acrylsäure, Maleinsäureanhydrid und Maleinsäureimide, die am Imidstickstoffatom mit einer $C_1$-$C_6$-Alkylgruppe, einer $C_6$-$C_{10}$-Aryl- oder einer $C_6$-$C_{10}$-Aryl-$C_1$-$C_4$-alkylgruppe, wobei die Arylreste bis zu dreifach mit $C_1$-$C_4$-Alkyl substituiert sein können, substituiert sind. |

Außerhalb dieses Bereiches der Zusammensetzung erhält man in der Regel bei Verarbeitungstemperaturen über 240°C trübe Formteile, die Bindenähte aufweisen und schlecht einfärbbar sind.

Als vinylaromatische Monomere eignen sich vorzugsweise Styrol, $\alpha$-Methylstyrol und bis zu dreifach am Phenylring mit $C_1$-$C_4$-Alkyl substituierte Styrolderivate wie tert.Butylstyrol und Vinyltoluol, besonders bevorzugt Styrol und $\alpha$-Methylstyrol.

Als $C_1$-$C_8$-Alkylester der Methacrylsäure kommen bevorzugt die $C_1$-$C_4$-Alkylester wie Methylmethacrylat ("MMA"), Ethylmethacrylat, n-, i-Propylmethacrylat, n-Butylmethacrylat, Isobutylmethacrylat, sek.- und tert.-Butylmethacrylat in Betracht, wobei Methylmethacrylat besonders bevorzugt ist, sowie Mischungen dieser Monomeren.

Als $C_1$-$C_8$-Alkylester der Acrylsäure verwendet man bevorzugt die $C_1$-$C_4$-Alkylester wie Methylacrylat ("MA"), Ethylacrylat, n-, i-Propylacrylat, n-Butylacrylat, Isobutylacrylat, sek.-, tert.-Butylacrylat und 2-Ethylhexylacrylat, wobei Methylacrylat besonders bevorzugt ist, sowie Mischungen dieser Monomeren.

Als Maleinsäureimide, die am Imidstickstoffatom mit einer $C_1$-$C_6$-Alkylgruppe wie Methyl, Ethyl, n-, i-Propyl, n-, i-, sek.-, tert.Butyl, Pentyl und Hexyl, substituiert sind, verwendet man bevorzugt N-Methylmaleinsäureimid, sowie N-$C_6$-$C_{10}$-Aryl- oder N-$C_6$-$C_{10}$-Aryl-$C_1$-$C_4$-alkyl-substituierte Maleinsäureimide, wobei die Arylgruppen bis zu dreifach mit $C_1$-$C_4$-Alkyl substituiert sein können, wie N-Phenylmaleinimid und N-Tolylmaleinimid, bevorzugt N-Phenylmaleinimid.

Als Komponente B) kann man beispielsweise Styrol-Acrylnitril(SAN)-, $\alpha$-Methylstyrol-Acrylnitril-, Styrol-$\alpha$-Methylstyrol-Acrylnitril- oder Styrol-Acrylnitril-Methylmethacrylat-Copolymerisate einsetzen, bevorzugt SAN-Copolymerisate, die nach dem in der GB-PS 1 472 195 beschriebenen Verfahren hergestellt wurden.

Ein Gehalt der Komponente b$_2$), insbesondere bei Acrylnitril, von mehr als 27 Gew.-% führt in der Regel bei den üblichen Verarbeitungstemperaturen von 250 bis 280°C zur teilweisen Entmischung mit der Komponente A), so daß Eintrübungen und eine schlechtere Einfärbbarkeit resultieren.

Die Menge der Komponente B), bezogen auf das Gesamtgewicht der transparenten, schlagzähen Formmassen, beträgt erfindungsgemäß 10 bis 50, bevorzugt 15 bis 40 Gew.-%.

Die Herstellung der Komponente B) führt man in der Regel nach bekannten Polymerisationsverfahren wie Masse-, Lösungs-, Emulsions- oder Perlpolymerisation durch. Solche Verfahren sind beispielsweise in Kunststoffhandbuch, Hrsg. Vieweg und Daumiller, Band V; Polystyrol, Carl-Hauser-Verlag, München 1969, S. 124 ff. und in der GB-PS 14 72 195 beschrieben.

Die erfindungsgemäßen Pfropfmischpolymerisate C) und D) werden im allgemeinen in an sich bekannter Weise erhalten (s. EP-A 6503). Als Pfropfgrundlagen $c_2$ und $d_2$ dienen erfindungsgemäß jeweils vernetzte $C_1$-$C_{20}$-Alkylester der Acrylsäure. Bevorzugt weisen diese vernetzten $C_1$-$C_{20}$-Alkylester der Acrylsäure eine Glasübergangstemperatur von maximal 0°C, besonders bevorzugt unter -30°C auf (bestimmt nach der DSC-Methode, s. K.H.Illers, Makromol. Chemie 127 (1969) 1).

Als $C_1$-$C_{20}$-Alkylester der Acrylsäure verwendet man bevorzugt die $C_1$-$C_8$-Alkylester wie Methylacrylat ("MA"), Ethylacrylat, n-, i-Propylacrylat, n-Butylacrylat, Isobutylacrylat, sek.-, tert.-Butylacrylat, n-Pentylacrylat, n-Hexylacrylat, n-Pentylacrylat, n-Octylacrylat und 2-Ethylhexylacrylat, wobei n-Butyl- und 2-Ethylhexylacrylat besonders bevorzugt sind, sowie Mischungen dieser Monomeren.

Um vernetzte Acrylsäureester-Polymerisate zu erhalten, führt man im allgemeinen die Polymerisation in Gegenwart von 0,5 bis 10 Gew.-%, vorzugsweise 1 bis 5 Gew.-%, bezogen auf die bei der Herstellung der Pfropfgrundlage eingesetzten gesamten Monomeren, eines copolymerisierbaren, mehrfunktionellen, die Vernetzung bewirkenden Monomeren durch. Als solche mehrfunktionellen Vernetzungs-Monomeren eignen sich in der Regel Monomere, die vorzugsweise zwei, gegebenenfalls auch mehr zur Copolymerisation befähigte ethylenische Doppelbindungen enthalten, die nicht in 1,3-Stellung konjugiert sind. Geeignete Monomere sind beispielsweise Divinylbenzol, Diallylmaleat, Diallylfumarat oder Diallylphthalat. Als besonders günstig hat sich der Acrylsäureester des Tricyclodecenylalkohols erwiesen (vgl. DE-PS 1 260 935, die auch für die nachstehend beschriebene Herstellung Hinweise gibt).

Bei der Herstellung der Komponente C) geht man im allgemeinen so vor, daß man zunächst die Pfropfgrundlage $c_2$) herstellt, indem der oder die Acrylsäureester und das vernetzende Monomere, gegebenenfalls zusammen mit weiteren Comonomeren vorteilhaft in wäßriger Emulsion in an sich bekannter Weise polymerisiert werden. Als Comonomere kann man bevorzugt die bei Komponente B) genannten Monomere sowie Diene, insbesonders Butadien und Isopren, verwenden. Es werden in der Regel die üblichen Emulgatoren, in Mengen von 0,5 bis 5 Gew.-%, bezogen auf die Monomeren, verwendet. Vorzugsweise verwendet man die Natriumsalze von Alkylsulfonaten oder Fettsäuren mit 10 bis 18 Kohlenstoffatomen. Im allgemeinen arbeitet man bei einem Wasser- zu Monomeren-Verhältnis von 2:1 bis 0,7:1. Als Polymerisationsinitiatoren dienen im allgemeinen die gebräuchlichen Persulfate, wie z.B. Kaliumpersulfat, es können jedoch auch Redox-Systeme zum Einsatz gelangen. Als weitere Polymerisationshilfsstoffe können die üblichen Puffersubstanzen und evtl. Molekulargewichtsregler wie Mercaptane, Terpinole oder dimeres $\alpha$-Methylstyrol verwendet werden.

Die genauen Polymerisationsbedingungen, insbesondere Art, Dosierung und Menge des Emulgators, werden üblicherweise so gewählt, daß der erhaltene Latex einen $d_{50}$-Wert im Bereich von 50 bis 150 nm, vorzugsweise im Bereich von 80 bis 100 nm besitzt. Die Teilchengrößen-Verteilung des Latex soll dabei vorzugsweise eng sein. Der Quotient $Q = (d_{90} - d_{10})/d_{50}$ beträgt bevorzugt weniger als 0,5, möglichst weniger als 0,35. Dies erreicht man z.B. dadurch, daß man während der Polymerisation für eine konstante Konzentration von Monomeren und Emulgator sorgt und eine konstante Temperatur einhält.

Zur Herstellung des Pfropfmischpolymerisates C) polymerisiert man erfindungsgemäß auf die als Latex, d.h. als Emulsion, vorliegende Pfropfgrundlage $c_2$) das Monomerengemisch der Komponente $c_1$) vorteilhaft in Emulsion.

Als vinylaromatische Monomere kommen beispielsweise Styrol, $\alpha$-Methylstyrol und bis zu dreifach mit $C_1$-$C_4$-Alkyl am Phenylring substituierte Styrolderivate wie tert. Butylstyrol und Vinyltoluol, besonders bevorzugt Styrol und $\alpha$-Methylstyrol, in Betracht.

Als polare copolymerisierbare, ethylenisch ungesättigte Monomere seien beispielhaft genannt: Acrylnitril, Methacrylnitril, $C_1$-$C_4$-Alkylester der Methacryl- und Acrylsäure wie Methylmethacrylat, Ethylmethacrylat, n-, i-Propylmethacrylat, n-, i-, sek.-, tert.-Butylmethacrylat, Methylacrylat, Ethylacrylat, n-, i-Propylacrylat, n-, i-, sek.-, tert.-Butylacrylat, Methacryl- und Acrylsäure, Maleinsäureanhydrid, Acrylamid und Vinylmethylether, vorzugsweise Acrylnitril und Methylmethacrylat, oder deren Mischungen.

Das Gewichtsverhältnis von vinylaromatischen Monomeren zu polaren Comonomeren wählt man im allgemeinen im Bereich von 90:10 bis 60:40 Gew.-%, bevorzugt von 80:20 bis 70:30 Gew.-%.

Die Pfropfmischpolymerisation kann im gleichen System erfolgen wie die Emulsionspolymerisation zur Herstellung der Pfropfgrundlage, wobei gewünschtenfalls weiterer Emulgator und Initiator zugegeben werden kann. Das aufzupfropfende Monomerengemisch kann man dem Reaktionsgemisch auf einmal, absatzweise in mehreren Stufen oder vorzugsweise kontinuierlich während der Polymerisation zugeben.

Die Mengen der Pfropfgrundlage und der Pfropfhülle wählt man erfindungsgemäß so, daß der Gehalt der Monomerenmischung $c_1$) (Hülle) 20 bis 45, vorzugsweise 30 bis 40 Gew.-%, bezogen auf das Gewicht der Komponente C), beträgt. Entsprechend wählt man den Gehalt der Monomerenmischung $c_2$) (Kern) im Bereich von 80 bis 55, vorzugsweise von 70 bis 60 Gew.-%, bezogen auf das Gewicht der Komponente C).

Da die Pfropfausbeute bei der Pfropfmischpolymerisation in der Regel kleiner als 100% beträgt, setzt man vorteilhaft eine etwas größere Menge des Monomerengemisches $c_1$) ein, als es dem gewünschten Pfropfgrad von 20 bis 45 Gew.-% entspricht. Die Steuerung der Pfropfausbeute bei der Pfropfmischpolymerisation und somit des Pfropfgrades der Komponente C), kann beispielsweise durch die Dosiergeschwindigkeit der Monomeren oder durch Reglerzugabe erfolgen (s. Chauvel, Daniel, ACS Polymer Preprints 15 (1974) 329).

Die Menge der Komponente C), bezogen auf das Gesamtgewicht der transparenten, schlagzähen Formmassen, beträgt erfindungsgemäß 5 bis 50, bevorzugt 7 bis 30 Gew.-%.

Als Pfropfgrundlage $d_2$) für die Herstellung des zweiten Pfropfmischpolymerisates D) setzt man ebenfalls einen vernetzten Polyacrylsäurester ein. Für die Art und Weise der Herstellung der Pfropfgrundlage $d_2$) gilt das vorstehend unter $c_2$) genannte.

Im Unterschied zum mittleren Teilchendurchmesser der Pfropfgrundlage $c_2$) wählt man den mittleren Teilchendurchmesser (Gewichtsmittel) der Pfropfgrundlage $d_2$) erfindungsgemäß im Bereich von 200 bis 700 nm, vorzugsweise von 250 bis 500 nm. Des weiteren ist es vorteilhaft, wenn die Pfropfgrundlage $d_2$) eine enge Teilchengrößenverteilung aufweist, wobei es sich als günstig erwiesen hat, wenn der Quotient $Q = (d_{90}-d_{10})/d_{50}$ kleiner als 0,3, vorzugsweise kleiner als 0,2 ist.

Die als Pfropfgrundlage $d_2$) dienenden vernetzten Acrylsäureester-Polymerisate können nach den bekannten Verfahren zur Herstellung großteiliger Dispersionen erhalten werden, zweckmäßig jedoch nach der Saatlatex-Methode, wie sie in der DE-PS 19 11 882 für die Herstellung von Acrylnitril-Styrol-Acrylester("ASA")-Copolymerisaten beschrieben ist. Nach dieser Methode wird ein kleinteiliger vernetzter Latex eines Acrylsäureester-Polymerisates mit einem mittleren Teilchendurchmesser von vorzugsweise unter 120 nm, der wie beschrieben durch Emulsionspolymerisation eines $C_1$-$C_{20}$-Alkylesters der Acrylsäure, vernetzenden Monomeren sowie gewünschtenfalls weiterer Comonomeren erhältlich ist, durch Zugabe von weiteren Monomeren und Emulgator einer weiteren Polymerisation unterworfen. Dabei werden vorzugsweise die Bedingungen (s. J. of Appl. Polymer Science, Vol.9 (1965) 2929) so eingestellt, daß im wesentlichen lediglich die vorhandenen Polymerisatpartikel des Saatlatex wachsen, d.h., daß keine neuen Latexteilchen gebildet werden. Die Teilchengröße des resultierenden großteiligen Latex läßt sich durch Variation des Mengenverhältnisses von Saatlatex zu Monomeren in der gewünschten Weise einstellen.

Zur Herstellung des erfindungsgemäßen zweiten Pfropfmischpolymerisates D) führt man - analog zur Herstellung der Komponente C) - die Pfropfmischpolymerisation in Gegenwart des zuvor hergestellten großteiligen Latex $d_2$) mit einem Monomerengemisch aus einem vinylaromatischen Monomeren und einem polaren, copolymerisierbaren, ethylenisch ungesättigten Monomeren durch.

Als vinylaromatische Monomeren kommen beispielsweise Styrol, $\alpha$-Methylstyrol und bis zu dreifach mit $C_1$-$C_4$-Alkyl am Phenylring substituierte Styrolderivate wie tert. Butylstyrol und Vinyltoluol, besonders bevorzugt Styrol und $\alpha$-Methylstyrol, in Betracht.

Als polare copolymerisierbare, ethylenisch ungesättigte Monomere seien beispielhaft genannt: Acrylnitril, Methacrylnitril,$C_1$-$C_4$-Alkylester der Methacryl- und Acrylsäure wie Methylmethacrylat, Ethylmethacrylat, n-, i-Propylmethacrylat, n-, i-, sek.-, tert.-Butylmethacrylat, Methylacrylat, Ethylacrylat, n-, 1-Propylacrylat, n-, i-, sek.-, tert.-Butylacrylat, Methacryl- und Acrylsäure, Maleinsäureanhydrid, Acrylamid und Vinylmethylether, vorzugsweise Acrylnitril und Methylmethacrylat, oder deren Mischungen.

Das Molverhältnis von vinylaromatischem Monomer zum polaren Copolymer wählt man im allgemeinen im Bereich von 90:10 bis 60:40, bevorzugt von 80:20 bis 70:30.

Die Pfropfmischpolymerisation kann im gleichen System erfolgen wie die Emulsionspolymerisation zur Herstellung der Pfropfgrundlage, wobei gewünschtenfalls weiterer Emulgator und Initiator zugegeben werden kann. Das aufzupfropfende Monomerengemisch kann man dem Reaktionsgemisch auf einmal, absatzweise in mehreren Stufen oder vorzugsweise kontinuierlich während der Polymerisation zugeben, vorzugsweise in zwei Stufen.

Die Mengen der Pfropfgrundlage und der Pfropfhülle wählt man erfindungsgemäß so, daß der Gehalt der Monomerenmischung $d_1$) (Hülle) 20 bis 60, vorzugsweise 25 bis 40 Gew.-%, bezogen auf das Gewicht der Komponente D), beträgt. Entsprechend wählt man den Gehalt der Monomerenmischung $d_2$) (Kern) im Bereich von 80 bis 40, vorzugsweise von 75 bis 60 Gew.-%, bezogen auf das Gewicht der Komponente D).

Da die Pfropfausbeute bei der Pfropfmischpolymerisation in der Regel kleiner als 100% beträgt, setzt man vorteilhaft eine etwas größere Menge des Monomerengemisches $d_1$) ein, als es dem gewünschten Pfropfgrad von 20 bis 60 Gew.-% entspricht. Die Steuerung der Pfropfausbeute bei der Pfropfmischpolymerisation und somit des Pfropfgrades der Komponente D), kann beispielsweise durch die Dosiergeschwindigkeit der Monomeren oder durch Reglerzugabe erfolgen (s. Chauvel, Daniel, ACS Polymer Preprints 15 (1974) 329).

Die Menge der Komponente D), bezogen auf das Gesamtgewicht der transparenten, schlagzähen Formmassen, beträgt erfindungsgemäß 5 bis 50, bevorzugt 7 bis 30 Gew.-%.

Die erfindungsgemäßen Formmassen können übliche Zusatz- und Hilfsstoffe enthalten, wie sie für ASA-Copolymere üblich sind. Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. Halogenide ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzen.

Beispiele für UV-Stabilisatoren sind substituierte Resorcine, Salicylate, Benzotriazole und Benzophenone, die man im allgemeinen in Mengen bis zu 2 Gew.-% einsetzen kann. Gleit- und formungsmittel, die man in der Regel bis zu 1 Gew.-% der plastischen Masse zusetzen kann, sind beispielsweise Stearinsäure, Stearylalkohol, Stearinsäurealkylester und -amide sowie Ester des Pentaerythrits mit langkettigen Fettsäuren.

Geeignete Farbstoffe und Pigmente sind beispielsweise Cadmiumsulfid, Kupfer-phthalocyanin, Eisenoxide und feinteilige Ruße. Die Farbstoffe und Pigmente setzt man üblicherweise in Mengen im Bereich von 0,02 bis 10, vorzugsweise 0,2 bis 5 Gew.-% ein.

Als Weichmacher, die man vorzugsweise in Mengen von 0,05 bis 10 Gew.-% einsetzen kann, seien Dioctylphthalat, Dibenzylphthalat und Butylbenzylphthalat genannt.

Als Flammschutzmittel kann man beispielsweise eine phosphorhaltige Verbindung in Mengen üblicherweise im Bereich bis zu 25 Gew.-%, bezogen auf das Gesamtgewicht, einsetzen.

Solche Flammschutzmittel sind beispielsweise sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Die Zugabe der Zusatzstoffe kann man in jeder Stufe der Herstellung durchführen, zweckmäßig gibt man die Stabilisatoren frühzeitig zu, um die Formmasse schon zu Beginn schützen zu können.

Die Herstellung der erfindungsgemäßen Formmassen führt man in der Regel nach an sich bekannten Verfahren durch, indem man die Ausgangskomponenten in üblichen Mischvorrichtungen entweder in der Schmelze wie in Schneckenextrudern, statischen Mischern oder Knetern mischt und anschließend austrägt, oder in fester Form die Komponenten in Brabender- oder Banbury-Mischer einbringt und dort unter Aufschmelzen mischt und anschließend extrudiert. Danach kühlt man die Formmasse im allgemeinen ab und zerkleinert sie. Die Mischtemperaturen wählt man in der Regel im Bereich von 180 bis 300°C, bevorzugt von 200 bis 280°C. Man kann auch die Komponenten als Dispersion herstellen, sie in dieser Form mischen, gemeinsam fällen und entwässern, und dann, wie oben beschrieben, mittels Extruder oder Kneter weiterverarbeiten.

Die Formmassen kann man nach üblichen Methoden weiterverarbeiten, z.B. durch Spritzguß, Extrusion oder Sintern, oder man bringt sie beispielsweise durch Coextrusion oder als Lack auf die zu schützende Trägermasse als Abdeckung oder Deckschicht auf.

Die erfindungsgemäßen Mischungen eignen sich daher bevorzugt zur Herstellung von Formkörpern wie Gartenmöbel, Boote, Schilder, Straßenlampenabdeckungen und Kinderspielzeug.

Aus den erfindungsgemäßen Massen hergestellte Gegenstände besitzen nach den bisherigen Beobachtungen einen hohen Oberflächenglanz und eine enge Glanzbreite. Unter Oberflächenglanz wird dabei das Reflexionsvermögen der Oberfläche für sichtbares Licht verstanden. Bei Verwendung der erfindungsgemäßen Massen werden Gegenstände erhalten, deren Glanzbreite deutlich höher liegt als bei Verwendung von Formmassen, wie sie in DE 28 26 925 beschrieben sind. Unter Glanzbreite versteht man die Differenz im Lichtreflexionsvermögen von Formkörpern, die bei Temperaturen hergestellt wurden, die hohe Reflexionswerte erzeugen, und von Formkörpern mit der gleichen Zusammensetzung wie die vorigen, die jedoch bei Temperaturen erhalten wurden, die niedrige Reflexions erzeugen.

Auch bei der Einfärbbarkeit der erfindungsgemäßen Formmassen bestehen Vorteile gegenüber den in der DE 28 26 925 beschriebenen Formmassen. Diese Vorteile machen sich vor allem bei kompliziert geformten Formteilen und dunklen Farben bemerkbar. Auch unter ungünstigen Bedingungen werden bei Verwendung der erfindungsgemäßen Formmassen homogen eingefärbte und brillante Oberflächen erhalten.

Unter Einfärbbarkeit wird dabei die Erzielung brillanter Farbtöne mit möglichst kleinen Pigmentmengen verstanden. Die erfindungsgemäßen Massen können daher als Zusatzstoffe insbesondere Farbstoffe oder Pigmente eingemischt enthalten.

Die eingefärbten Formkörper zeichnen sich durch einen ausgezeichneten Farbeindruck aus, wobei brillante und leuchtende Farbtöne ohne jede Eintrübung oder Grauschleier erhalten werden können. Die Formkörper besitzen auch praktisch keine unterschiedliche Farbtönung im Bereich der Angußstelle und der Bindenaht, wie sie unerwünscht bei der Spritzgußverarbeitung von gefärbten ASA-Polymerisaten mit kleinteiligen Pfropfmischpolymerisaten der Komponente A) stark beobachtet werden. Die durch Spritzguß verarbeiteten, gefärbten erfindungsgemäßen Massen zeigen vielmehr eine gute Farbegalität im Bereich der Angußmarkierung und der Bindenaht.

Beispiele

Bei den erfindungsgemäßen mittleren Teilchengrößen handelt es sich in allen Fällen um das Gewichtsmittel der Teilchengrößen, die mittels einer analytischen Ultrazentrifuge entsprechend der Methode von W. Scholtan und H. Lange, Kolloid-Z. und Z.Polymere 250 (1972), Seiten 782 bis 796, bestimmt werden. Die Ultrazentrifugenmessung liefert die integrale Massenverteilung des Teilchendurchmessers eine Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die aus der integralen Massenverteilung bestimmten $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient Q

$$\frac{d_{90} - d_{10}}{d_{50}} = Q$$

stellt ein Maß für die Verteilungsbreite der Teilchengröße dar.

Die Kerbschlagzähigkeit $a_k$ (Spritztemperatur/Prüftemperatur) und die Schlagzähigkeit $a_n$ (Spritztemperatur/Prüftemperatur) (in kJ/m$^2$) wurden nach DIN 53453 an bei 220, 250 und 280°C gespritzten Normkleinstäben bei 23°C, 0°C und -40°C Prüftemperatur gemessen.

Die Wärmeformbeständigkeit Vicat B 50 wurde nach DIN 54460 bestimmt.

Der Volumenfließindex MVI (in cm$^3$/10 Minuten) wurde nach DIN 53735 bei einer Temperatur von 200°C und 21,6 kg bestimmt.

Die Durchstoßarbeit Wg (Spritztemperatur/Prüftemperatur) (in Nm) wurde nach DIN 53433 an Rundscheiben mit 60 mm Durchmesser und 2 mm Dicke bestimmt.

Die Einfärbbarkeit wurde anhand zweier charakteristischer Parameter bestimmt, a) dem K/S-Wert und b) dem dE-Wert. Der K/S-Wert wurde an Rundscheiben mit 60 mm Durchmesser und 2 mm Dicke bestimmt, die aus den in den Beispielen angegebenen Formmassen + 1 % eines Farbstoffs (Macrolex-Rot CD) gespritzt wurden.

Der K/S-Wert wurde gemäß der in DIN 53234 genannten Meß- und Auswertemethode ermittelt. Es wurde jedoch hier nicht die Farbstärke des Pigments, sondern die des Prüfmaterials bestimmt.

Der dE-Wert nach DIN 6174 des Prüfmaterials wurde aus einer Farbdifferenzverbesserung des Naturmaterials über weißem und schwarzem Untergrund errechnet.

Für die nachstehend beschriebenen Versuche wurden folgende Komponenten eingesetzt.

A. Leichtfließendes Methylmethacrylat-Methylacrylat-Copolymer von 91 Gew.-% MMA + 9 Gew.-% MA mit einem MVI(200/21.6) von 29 cm$^3$/10 min.

B1. Copolymerisat aus Styrol und Acrylnitril im Gew.-Verhältnis 75:25 und einer Viskositätszahl von 80 ml/g, gemessen in einer 0,5 Gew.-%igen Lösung in Dimethylformamid bei 23°C.

B2. (Vergleichsversuch) Copolymerisat aus Styrol und Acrylnitril im Gew.-Verhältnis 65:35 und einer Viskositätszahl von 80 ml/g, gemessen in einer 0,5 Gew.-%igen Lösung in Dimethylformamid bei 23°C.

Herstellung des feinteiligen Pfropfmischpolymerisats C)

Kern:

$c_2$) 16 Teile n-Butylacrylat und 0,4 Teile Tricyclodecenylacrylat wurden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Reaktion wurde innerhalb von 3 Stunden eine Mischung aus 82 Teilen Butylacrylat und 1,6 Teilen Tricyclodecenylacrylat zugegeben. Danach wurde noch eine Stunde sich selbst überlassen. Der erhaltene Latex hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).

Hülle:

c$_1$) 150 Teile des nach c$_2$) erhaltenen Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Sodann wurde mittels Calciumchloridlösung bei 95°C gefällt, mit Wasser gewaschen und im warmen Luftstrom getrocknet. Der Pfropfgrad des Pfropfmischpolymerisats war 35 %, wobei als Pfropfgrad der prozentuale Anteil des chemisch gebundenen Styrols und Acrylnitrils, bezogen auf das gesamte Pfropfmischpolymerisat, verstanden wird. Der Pfropfgrad wurde aus der analytisch bestimmbaren Zusammensetzung des Methylethylketonunlöslichen Gels berechnet.

Herstellung des großteiligen Pfropfmischpolymerisats D)

Kern:

d$_2$) Zu einer Vorlage aus 2,5 Teilen des wie in (c$_2$) beschriebenen hergestellten Latex wurden nach Zugabe von 50 Teilen Wasser und 0,1 Teilen Kaliumpersulfat im Verlauf von 3 Stunden einerseits eine Mischung aus 49 Teilen n-Butylacrylat und 1 Teil Tricyclodecenylacrylat und andererseits eine Lösung von 0,5 Teilen des Natriumsalzes einer C$_{12}$- bis C$_{18}$-Paraffinsulfonsäure in 25 Teilen Wasser zugegeben. Dabei betrug die Temperatur der Vorlage 60°C. Nach Zulaufende wurde zwei Stunden nachpolymerisiert. Der erhaltene Latex hatte einen Feststoffgehalt von 40 %. Die mittlere Teilchengröße (Gewichtsmittel) des Latex wurde zu 410 nm ermittelt.

Hülle:

d$_1$) 150 Teile des nach d$_2$) erhaltenen Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die erhaltene Dispersion wurde mit 20 Teilen eines Gemisches aus Styrol und Acrylnitril im Verhältnis 75:25 weitere 4 Stunden polymerisiert, mittels Calciumchloridlösung bei 95°C gefällt, abgetrennt, mit Wasser gewaschen und im warmen Luftstrom getrocknet. Der Pfropfgrad wurde zu 35 % ermittelt, wobei als Pfropfgrad der prozentuale Anteil des chemisch gebundenen Styrols und Acrylnitrils, bezogen auf das gesamte Pfropfmischpolymerisat, verstanden wird. Der Pfropfgrad wurde aus der analytisch bestimmbaren Zusammensetzung des Methylethylketon-unlöslichen Gels berechnet.

Zur Herstellung der Formmassen wurden die Komponenten A bis D in einem Fluidmischer vorgemischt und anschließend auf einem Doppelschneckenextruder ZSK 30 der Fa. Werner & Pfleiderer bei 240°C und 200 U/min bei einem Durchsatz von 10 kg/h zu einem Strang konfektioniert. Dieser Strang wurde anschließend granuliert. Das Granulat wurde in der Spritzgußverarbeitung aufgeschmolzen und zu Prüfkörpern verspritzt.

| | Beispiel | V-1 | V-2 |
|---|---|---|---|
| A | 40 | 40 | - |
| B1 | 10 | 10 | - |
| B2 | - | - | 71 |
| C | 30 | 50 | 29 |
| D | 20 | - | - |
| Vicat [°C] | 82 | 81 | 103 |
| MVI [ml/10 min] | 3.3 | 2.4 | 8.1 |
| a$_n$ (220/23) [kJ/m$^2$] | 8n | 5n/86 | 2n/53 |
| a$_n$ (220/0) [kJ/m$^2$] | 4n/79 | 1n/83 | 3n/57 |
| a$_n$ (220/-40) [kJ/m$^2$] | 49 | 42 | 23 |
| a$_k$ (220/23) [kJ/m$^2$] | 9 | 5 | 4 |
| a$_k$ (250/23) [kJ/m$^2$] | 12 | 5 | 8 |
| a$_k$ (280/23) [kJ/m$^2$] | 15 | 11 | 4 |
| Wg (220/23) [Nm] | 17 | 12 | 38 |

(fortgesetzt)

|  | Beispiel | V-1 | V-2 |
|---|---|---|---|
| Wg (250/23) [Nm] | 23 | 17 | 44 |
| Wg (220/23) [Nm] | 28 | 27 | 42 |
| K/S | 52 | 69 | 47 |
| dE | 20 | 36 | 3 |

8 n bedeutet, daß 8 Stäbe geprüft wurden und alle 8 Stäbe nicht gebrochen sind; 5n/86 bedeutet, daß von 8 geprüften Stäben, 5 nicht brachen, und von den 3 gebrochenen, der arithmetrische Mittelwert der Schlagzähigkeit $a_n$ bei 86 kJ/$m^2$ lag. Entsprechend sind die anderen Ergebnisse (2n/53, 4n/79 etc.) zu interpretieren.

**Patentansprüche**

1. Thermoplastische Formmassen, enthaltend im wesentlichen

   A) 10 bis 80 Gew.%      eines Polymerisates, erhältlich durch Polymerisation eines $C_1$-$C_{20}$-Alkylesters der Methacryl- oder Acrylsäure oder Mischungen solcher Ester,

   B) 10 bis 50 Gew.-%      eines Copolymerisates, erhältlich durch Polymerisation eines Monomerengemisches aus

            $b_1$) 73 bis 90 Gew.-% eines vinylaromatischen Monomeren und
   $b_2$) 27 bis 10 Gew.-% eines Comonomeren, ausgewählt aus der Gruppe bestehend aus Acrylnitril, Methacrylnitril, $C_1$-$C_8$-Alkylester der Methacryl- und/oder Acrylsäure, Maleinsäureanhydrid und Maleinsäureimide, die am Imidstickstoff mit einer $C_1$-$C_6$-Alkylgruppe, einer $C_6$-$C_{10}$-Aryl- oder einer $C_6$-$C_{10}$-Aryl-$C_1$-$C_4$-alkylgruppe, wobei die Arylreste bis zu dreifach mit $C_1$-$C_4$-Alkyl substituiert sein können, substituiert sind,

   C) 5 bis 50 Gew.-%      eines Pfropfmischpolymerisats, erhältlich durch Polymerisation von

            $c_1$) 20 bis 45 Gew.-% einer Monomerenmischung aus einem vinylaromatischen Monomeren und einem polaren, copolymerisierbaren, ethylenisch ungesättigten Monomeren in Gegenwart von
   $c_2$) 55 bis 80 Gew.-% einer Pfropfgrundlage, erhältlich durch Polymerisation mindestens eines vernetzten, elastomeren $C_1$-$C_{20}$-Alkylester der Acrylsäure mit einem mittleren Teilchendurchmesser (Gewichtsmittel) von 50 bis 150 nm,

   und

   D) 5 bis 50 Gew.-%      eines weiteren Pfropfmischpolymerisates, erhältlich durch Polymerisation von

            $d_1$) 20 bis 60 Gew.-% eines Monomerengemisches aus einem vinylaromatischen Monomeren und einem polaren, copolymerisierbaren, ethylenisch ungesättigten Monomeren
   in Gegenwart von
   $d_2$) 40 bis 80 Gew.-% eines vernetzten, elastomeren $C_1$-$C_{20}$-Alkylesters der Acrylsäure als Pfropfgrundlage mit einem mittleren Teilchendurchmesser (Gewichtsmittel) von 200 bis 700 nm.

2. Thermoplastische Formmassen nach Anspruch 1, dadurch gekennzeichnet, daß man die Komponente A) aus einem Monomerengemisch aus

            $a_1$) 80 bis 100 Gew.-% Methacrylsäure, und
   $a_2$) 0 bis 20 Gew.-% eines $C_1$-$C_{20}$-Alkylesters der Acrylsäure

herstellt.

3. Verfahren zur Herstellung von thermoplastischen Formmassen gemäß Anspruch 1 oder 2, dadurch gekennzeichnet, daß man die Komponenten A) bis D) in der Schmelze mischt.

4. Verwendung der thermoplastischen Formmassen gemäß Anspruch 1 oder 2 zur Herstellung von Formkörpern.

5. Formkörper, erhältlich aus den thermoplastischen Formmassen gemäß Anspruch 1 oder 2.

## Claims

1. A thermoplastic molding material, containing essentially

   A) from 10 to 80% by weight of a polymer obtainable by polymerizing a $C_1$-$C_{20}$-alkyl ester of methacrylic or acrylic acid or a mixture of such esters,
   B) from 10 to 50% by weight of a copolymer obtainable by polymerizing a monomer mixture of

   $b_1$) from 73 to 90% by weight of a vinylaromatic monomer and
   $b_2$) from 27 to 10% by weight of a comonomer selected from the group consisting of acrylonitrile, methacrylonitrile, $C_1$-$C_8$-alkyl esters of methacrylic and/or acrylic acid, maleic anhydride and maleimides which are substituted on the imide nitrogen by $C_1$-$C_6$-alkyl, $C_6$-$C_{10}$-aryl or $C_6$-$C_{10}$-aryl-$C_1$-$C_4$-alkyl, where the aryl radicals may be monosubtituted, disubstituted or trisubstituted by $C_1$-$C_4$-alkyl,

   C) from 5 to 50% by weight of a graft copolymer obtainable by polymerizing

   $c_1$) from 20 to 45% by weight of a monomer mixture of a vinylaromatic monomer and a polar, copolymerizable, ethylenically unsaturated monomer in the presence of
   $c_2$) from 55 to 80% by weight of a grafting base obtainable by polymerizing at least one crosslinked, elastomeric $C_1$-$C_{20}$-alkyl ester of acrylic acid having a median particle diameter (weight average) of from 50 to 150 nm

   and

   D) from 5 to 50% by weight of a further graft copolymer obtainable by polymerizing

   $d_1$) from 20 to 60% by weight of a monomer mixture of a vinylaromatic monomer and a polar, copolymerizable, ethylenically unsaturated monomer in the presence of
   $d_2$) from 40 to 80% by weight of a cross-linked, elastomeric $C_1$-$C_{20}$-alkyl ester of acrylic acid as a grafting base, having a median particle diameter (weight average) of from 200 to 700 nm.

2. A thermoplastic molding material as claimed in claim 1, wherein component A) is prepared from a monomer mixture of

   $a_1$) from 80 to 100% by weight of methacrylic acid and
   $a_2$) from 0 to 20% by weight of a $C_1$-$C_{20}$-alkyl ester of acrylic acid.

3. A process for the preparation of a thermoplastic molding material as claimed in claim 1 or 2, wherein components A) to D) are mixed in the melt.

4. Use of a thermoplastic molding material as claimed in claim 1 or 2 for the production of moldings.

5. A molding obtainable from a thermoplastic molding material as claimed in claim 1 or 2.

## Revendications

1. Masses à mouler thermoplastiques contenant essentiellement

A) de 10 à 80% en poids     d'un polymère que l'on obtient par polymérisation d'un ester alkylique en $C_1$-$C_{20}$ d'acide méthacrylique ou d'acide acrylique, ou encore de mélanges d'esters de ce type,

B) de 10 à 50% en poids     d'un copolymère que l'on obtient par polymérisation d'un mélange de monomères constitué par

b1) de 73 à 90% en poids d'un monomère vinylaromatique et
b2) de 27 à 10% en poids d'un comonomère choisi parmi le groupe constitué par l'acrylonitrile, le méthacrylonitrile, des esters alkyliques en $C_1$-$C_8$ d'acide méthacrylique et/ou acrylique, l'anhydride maléique et des imides maléiques qui sont substitués sur l'atome d'azote de l'imide avec un groupe alkyle en $C_1$-$C_6$, un groupe aryle en $C_6$-$C_{10}$ ou encore un groupe aryl(en $C_6$-$C_{10}$)alkyle en $C_1$-$C_4$, les radicaux aryle pouvant être substitués jusqu'à trois fois avec un groupe alkyle en $C_1$-$C_4$,

C) de 5 à 50% en poids     d'un copolymère greffé que l'on obtient par polymérisation de

c1) 20 à 45% en poids d'un mélange de monomères constitué par un monomère vinylaromatique et par un monomère polaire copolymérisable à insaturation éthylénique, en présence de
c2) 55 à 80% en poids d'un substrat de greffage que l'on obtient par polymérisation d'au moins un ester alkylique en $C_1$-$C_{20}$ élastomère réticulé d'acide acrylique, possédant un diamètre de particules moyen (moyenne en poids) de 50 à 150 nm

et

D) de 5 à 50% en poids     d'un autre copolymère greffé que l'on obtient par polymérisation de

d1) 20 à 60% en poids d'un mélange de monomères constitué par un monomère vinylaromatique et par un monomère polaire copolymérisable à insaturation éthylénique,
en présence de
d2) 40 à 80% en poids d'un ester alkylique en $C_1$-$C_{20}$ élastomère réticulé d'acide acrylique comme substrat de greffage possédant un diamètre de particules moyen (moyenne en poids) de 200 à 700 nm.

2. Masses à mouler thermoplastiques selon la revendication 1, caractérisées en ce qu'on prépare le composant A) à partir d'un mélange de monomères constitué par

$a_1$) de 80 à 100% en poids d'acide méthacrylique et
$a_2$) de 0 à 20% en poids d'un ester alkylique en $C_1$-$C_{20}$ d'acide acrylique

3. Procédé pour la préparation de masses à mouler thermoplastiques selon la revendication 1 ou 2, caractérisé en ce qu'on mélange les composants A) à D) en fusion.

4. Utilisation des masses à mouler thermoplastiques selon la revendication 1 ou 2, pour la préparation de corps moulés.

5. Corps moulés que l'on obtient à partir des masses à mouler thermoplastiques selon la revendication 1 ou 2.